# FASCICULE DE BREVET EUROPEEN

(11) **EP 1 546 596 B1**
(45) Date de publication et mention de la délivrance du brevet: **16.11.2005**
(21) Numéro de dépôt: 03762715.5
(22) Date de dépôt: 30.06.2003
(51) Int. Cl.: F16L 11/16

(54) **CONDUITE TUBULAIRE FLEXIBLE POUR LE TRANSPORT D'HYDROCARBURES A CARCASSE ANTI-TURBULENCE**
FLEXIBLE RÖHRENFÖRMIGE LEITUNG ZUR BEFÖRDERUNG VON KOHLENWASSERSTOFFEN MIT STRÖMUNGSBILDUNG VERHINDERNDER KARKASSE
FLEXIBLE TUBULAR PIPE FOR HYDROCARBON TRANSPORT WITH ANTI-TURBULENCE CARCASS

(30) Priorité: 05.07.2002 FR 0845402
(43) Date de publication de la demande: 29.06.2005
(73) Titulaire: Technip France, 92400 Courbevoie (FR)
(72) Inventeur: CROME, Tim, 1385 Asker (NO)
(74) Mandataire: Bertrand, Didier
(86) Numéro de dépôt international: PCT/FR2003/002020
(87) Numéro de publication internationale: WO 2004/005785

(56) Documents cités:
- EP-A- 0 429 357
- DE-C- 899 885

## Description

La présente invention concerne une conduite tubulaire flexible pour le transport d'hydrocarbures, du type comportant au moins une carcasse, une gaine de pression interne et une ou plusieurs nappes d'armure et dont la carcasse, formant l'élément le plus interne de la conduite, est constituée par l'enroulement en spires agrafées d'un élément allongé profilé de type feuillard ou fil de forme.

Une telle conduite est appelée couramment "rough bore" (à passage non-lisse) parce que la carcasse qui constitue la couche intérieure de la conduite comporte des discontinuités apparentes au niveau des déjoints séparant les spires, au contraire des conduites dites "smooth bore" (à passage 1 isse) d ans lesquelles la couche la plus interne de la conduite est formée par une gaine intérieure couvrant intérieurement la voûte.

Une telle conduite peut éventuellement comprendre en plus des couches mentionnées, d'autres couches particulières, comme une voûte de pression, une frette, des gaines intermédiaires, une gaine de protection externe, etc.

La carcasse est, comme le rappellent les recommandations API 17J de l'American Petroleum Institute, une couche tubulaire, en principe interne, formée d'un enroulement métallique agrafé et destinée essentiellement à empêcher l'écrasement ou l'effondrement ("collapse") de la gaine d'étanchéité interne ou de la conduite en l'absence de pression interne dans la conduite sous l'effet de la pression externe, de la pression engendrée par les armures de traction, voire des charges mécaniques extérieures (notamment lors de la pose, dans les organes de préhension).

La carcasse est réalisée le plus traditionnellement en feuillard résistant à la corrosion, profilé généralement selon une forme en section voisine d'un S couché et enroulé de manière à réaliser des spires agrafées les unes aux autres. Afin d'améliorer les performances d'une carcasse, diverses propositions ont déjà été faites. On pourra se reporter ainsi au document EP 0 429 357 de la Demanderesse, montrant une carcasse dont le feuillard constitutif comprend une onde formant une structure d'appui qui augmente la hauteur de la section et donc l'inertie, améliorant la résistance à l'écrasement de la carcasse.

Il existe aussi dans l'art antérieur des carcasses réalisées en fil de forme spiralé.

La Demanderesse a également proposé, dans la demande FR 01 13 748 une conduite à carcasse mixte constituée par un enroulement d'au moins un élément allongé métallique tel qu'un fil et agrafé par un feuillard.

Dans tous les cas considérés et auxquels l'invention est destinée, la carcasse comprend donc au moins en partie un feuillard ou un fil de forme spiralé.

Un problème est apparu sur les conduites flexibles montantes (dites "risers") de production et d'export d'hydrocarbures gazeux. Ce problème est lié à l'écoulement du gaz dans la conduite "rough bore" et plus précisément aux phénomènes de formation de tourbillons qui apparaissent au contact des déjoints entre les spires de la carcasse. En effet, la discontinuité de surface rencontrée au niveau de ces déjoints entraîne la formation de tourbillons (en anglais "vortex shedding") qui perturbent l'écoulement du gaz dans la conduite. Ces tourbillons induisent des variations de pression cycliques qui peuvent conduire à des problèmes de résonance (vibrations, bruits) dans la conduite et au niveau des équipements et tuyauteries situés sur la plate-forme (ou le FPSO "Floating producing storage and offloading") et généralement appelés "topsides". Ces fluctuations de pression et surtout ces vibrations résultantes peuvent devenir très importantes et conduire à des problèmes de fatigue, notamment dans lesdits équipements qui subissent alors des sollicitations et plus importantes que celles pour lesquelles elles ont été conçues. Ces problèmes peuvent engendrer de nombreux désagréments comme par exemple des fuites dues à la fatigue au niveau des tubulures et équipements connectés aux embouts des conduites.

Une solution à ces problèmes consisterait à modifier des réglages au niveau des équipements de la plate-forme ou du puits, modifiant ainsi les conditions d'utilisation des conduites pour éviter ces phénomènes de résonance (réduction de la pression, du débit, etc.). Toutefois, si ces modifications des conditions d'utilisation de la conduite permettent de réduire les effets de ces tourbillons en diminuant les problèmes de résonance, elles ne permettent pas d'optimiser l'utilisation de la conduite ni de résoudre réellement le problème posé par ces tourbillons.

Le but de l'invention est de trouver une solution à ces problèmes de tourbillons et de proposer une conduite de type "rough bore" permettant des écoulements gazeux ne présentant plus ces turbulences néfastes ni les phénomènes de résonance associés.

Ce but est atteint selon l'invention grâce à une conduite tubulaire flexible pour le transport d'hydrocarbures, notamment gazeux, la conduite étant du type comportant au moins une carcasse, une gaine de pression interne et une ou plusieurs nappes d'armure et dont la carcasse, formant l'élément le plus interne de la conduite, est constituée par l'enroulement en spires agrafées d'un élément profilé de type feuillard ou fil de forme, caractérisée en ce que les spires de la carcasse comportent dans l'épaisseur de l'élément profilé des passages traversants destinés à permettre l'écoulement, vers l'intérieur des spires de la carcasse, de l'hydrocarbure circulant dans la conduite.

Ces passages sont de préférence sous forme d'orifices, de trous ou de perforations pratiqués dans l'élément profilé, de préférence avant l'enroulement. Dans le cas où l'élément profilé est un feuillard, seul ou associé avec un autre élément allongé, les perforations sont de préférence pratiquées dans le feuillard avant profilage.

Quoique les perforations, destinées à modifier les conditions d'établissement des tourbillons et des résonances associées, puissent se trouver à un certain écart du lieu d'établissement de ces tourbillons (les déjoints), elles sont, dans un mode préféré de réalisation situées au niveau des déjoints entre les spires pour permettre une circulation du fluide au travers de la carcasse au niveau de ces déjoints. Ceci permet de modifier les conditions locales du flux qui amenaient à la formation de tourbillons, et de réduire voire d'empêcher la formation de ces tourbillons, ou du moins d'empêcher l'apparition des phénomènes de résonance liés à ces tourbillons.

Selon l'invention, les trous pratiqués sont de préférence orientés parallèlement à l'axe de la conduite. Avantageusement, les trous successifs d'une spire sont alignés parallèlement à l'axe de la conduite. Il peut aussi être prévu que les trous de spires successives soient alignés parallèlement à l'axe de la conduite, ce qui nécessite de fixer leur position sur l'élément profilé en fonction du diamètre des spires pour permettre cet alignement. Avantageusement, les trous sont situés sur une enveloppe cylindrique imaginaire qui rencontre les déjoints intérieurs.

Dans un mode préféré de réalisation la carcasse est formée par un feuillard conformé en S, éventuellement avec une onde de renforcement prévue sur une des boucles du S. Dans ce cas, les trous sont avantageusement prévus dans au moins l'une des trois zones suivantes du S : zone centrale, zones d'extrémité des boucles du S ; de préférence, on prévoit des trous dans chacune des trois zones mentionnées.

Avantageusement, les trous ont un diamètre de l'ordre de l'épaisseur du feuillard, par exemple de l'ordre de 1 mm à 2,5 mm. Ils sont avantageusement espacés le long du feuillard d'une distance de l'ordre de 5 à 10 fois leur diamètre.

L'invention concerne aussi un procédé de fabrication d'une conduite tubulaire flexible pour le transport d'hydrocarbures, notamment gazeux, la conduite étant du type comportant au moins une carcasse, une gaine de pression interne et une ou plusieurs nappes d'armure et dont la carcasse forme l'élément le plus interne de la conduite, le procédé étant du type comprenant le profilage et l'enroulement en spires d'un feuillard de manière à réaliser l'agrafage des spires entre elles, caractérisé en ce que le feuillard est préalablement perforé de façon à former, une fois les spires formées pour réaliser la carcasse, des passages traversants destinés à permettre l'écoulement vers l'intérieur des spires de la carcasse, de l'hydrocarbure circulant dans la conduite.

D'autres avantages et caractéristiques seront mis en évidence à la lecture de la description qui suit, en référence aux dessins schématiques annexés sur lesquels :
La figure 1 est une vue en perspective d'une conduite de type "rough bore", à laquelle s'applique l'invention,
La figure 2 est une vue schématique agrandie d'une section longitudinale de carcasse de l'art antérieur, réalisée par enroulement de feuillard en S,
La figure 3 est une vue schématique agrandie d'une section longitudinale de carcasse, selon un mode de réalisation de l'invention,
La figure 4 est une vue de détail en perspective de deux parties de spires de carcasses, selon le même mode de réalisation,
La figure 5 est une vue schématique en perspective d'une partie d'un feuillard perforé servant à la fabrication des spires de la carcasse des figures 3 et 4.

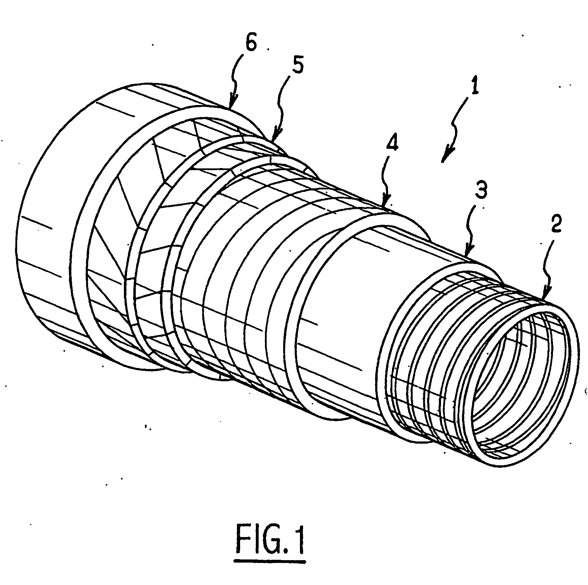

La conduite flexible 1 représentée figure 1 comprend de l'intérieur vers l'extérieur :
- une carcasse 2 constituée d'un enroulement métallique agrafé qui sert à empêcher l'écrasement de la conduite sous la pression externe,
- une gaine étanche de pression interne 3, réalisée en matière plastique généralement polymère, résistant à l'action chimique du fluide à transporter,
- une voûte de pression 4 résistant principalement à la pression développée par le fluide dans la gaine de pression et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I,
- au moins une nappe 5 (et généralement au moins deux nappes croisées) d'armures de traction enroulées à pas long ; l'angle d'armage mesuré sur l'axe longitudinal de la conduite est par exemple sensiblement égal à 55°, et
- une gaine 6 de protection et d'étanchéité externe en polymère.

La voûte de pression, destinée essentiellement à résister à la pression interne n'est pas nécessaire dans toutes les situations et, compte tenu du surcoût qu'elle engendre, on préfère utiliser une conduite sans voûte de pression chaque fois que les circonstances le permettent. L'invention s'applique à un cas comme à l'autre.

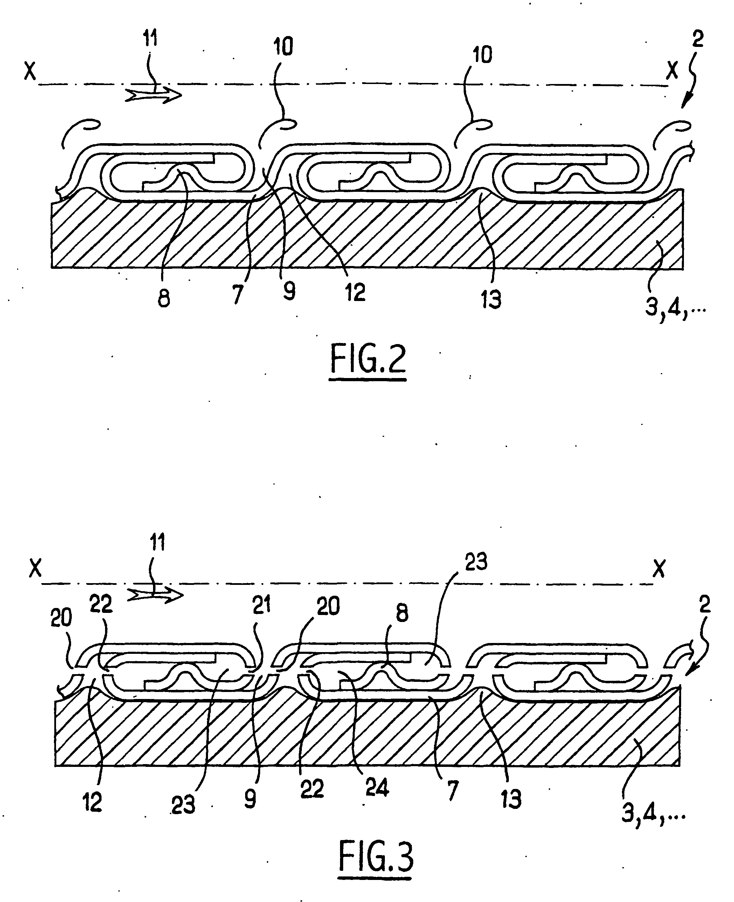

La figure 2 montre la constitution d'une carcasse 2 connue par le document EP 0 429 357, faite de l'enroulement hélicoïdal autour d'un axe XX d'un feuillard 7 formé en S aplati, muni d'une onde d'appui 8. Les déjoints intérieurs 9 apparaissant entre les spires adjacentes forment un puits fermé et sont la cause de tourbillons symbolisés par les lignes 10 au niveau de l'écoulement de fluide gazeux dans la conduite, dont le flux général est symbolisé par la flèche 11. Les déjoints extérieurs 12 sont obturés par la couche plastique de la gaine 3 qui entoure la carcasse et flue légèrement dans les déjoints 11 en formant des indentations 13.

Selon l'invention, l'épaisseur du feuillard 7, laquelle est généralement de l'ordre de 2 mm, est traversée par des perforations 20, 21 destinées à faire communiquer les déjoints intérieurs 9 avec les espaces voisins à l'intérieur des spires. Les perforations (ou toute autre forme d'ouvertures localisées) sont prévues au niveau des déjoints intérieurs 9, comme on le voit pour les orifices 20, réalisés dans la partie centrale de feuillard 7 joignant les deux boucles de S, et/ou pour les orifices 21 formés dans l'extrémité de boucle du S située du côté du déjoint intérieur 9. D'autres perforations, telles que les orifices 22 formés dans l'extrémité de boucle du S du côté du déjoint extérieur 12, peuvent être prévues pour accroître le volume total d'expansion et de communication accessible grâce aux divers orifices, à partir d'un déjoint intérieur 9. En effet, le déjoint 9 est ainsi mis en communication par les orifices 21 avec le premier volume intérieur 23 de la boucle de S et aussi, via les orifices 20 et 22, avec le second volume intérieur 24 de la boucle de S, séparé du premier volume par l'onde 8. Au besoin, l'onde 8 peut elle-même comporter des passages traversants pour améliorer la circulation du gaz, quoique le but recherché et permettant d'atténuer les tourbillons ne soit pas la circulation du gaz dans la carcasse tout au long, mais plutôt la modification des conditions locales de l'écoulement au voisinage des déjoints intérieurs 9. Les conditions locales de l'écoulement au voisinage des déjoints intérieurs 9 sont ainsi modifiées par les orifices 20 à 22 de sorte que les tourbillons ne peuvent pas prendre naissance ou du moins la résonance risquant d'être engendrée par lesdits tourbillons ne se produise pas.

Comme on le voit sur les figures, la succession des trous 20 à 22 est avantageusement disposée parallèlement au flux 11 et à l'axe XX de la conduite, d'une part au sein de chaque spire (ce qui résulte du positionnement de l'alignement des trous sur la bande de feuillard 7 elle-même) et d'autre part d'une spire à l'autre (ce qui résulte d'une adéquation entre le pas des trous le long de la bande de feuillard et le diamètre d'enroulement de celui-ci) ; chaque trou 20 à 22 se trouve lui-même orienté parallèlement à l'axe XX et sensiblement dans un cylindre intermédiaire compris entre les enveloppes cylindriques intérieure et extérieure de l'enroulement des spires en S, de manière à intersecter les déjoints intérieurs 9.

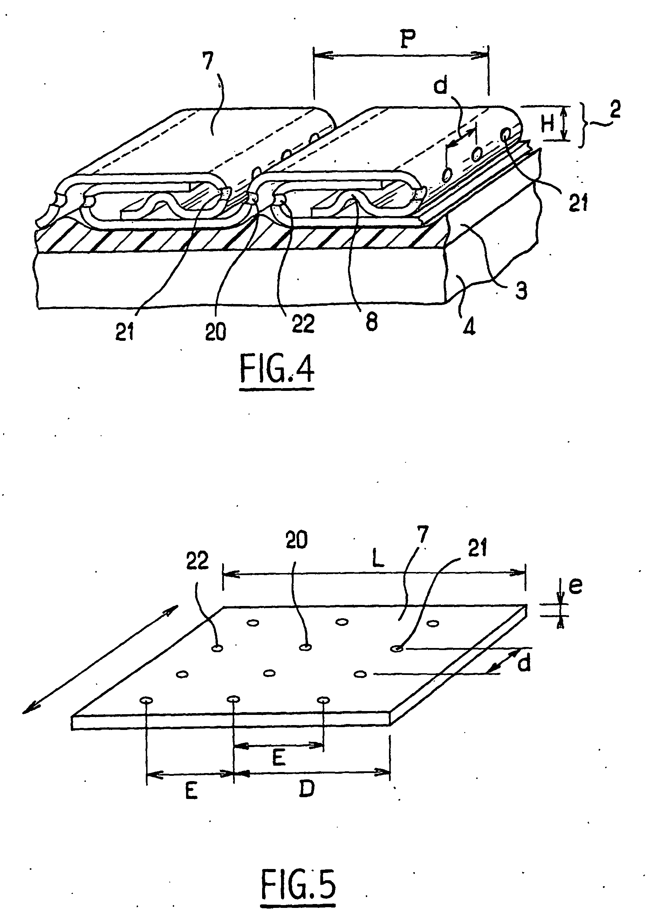

La figure 5 montre une portion de bande de feuillard 7, avant formage en S, dans laquelle sont prévues trois lignes de perforations 22, 20 et 21. De manière typique mais non limitative, l'épaisseur e du feuillard 7 est de 1,8 mm. La largeur L de la bande de feuillard est de 72 mm, l'espacement E entre les lignes de trous est de 20 mm, la ligne de trous 20, centrale, étant à une distance D de 36 mm du bord. La distance d entre deux trous consécutif d'une ligne est de 5 à 10 fois le diamètre de la perforation 20 à 22, lequel diamètre est de l'ordre de l'épaisseur e du feuillard. La hauteur H des spires formées est typiquement de 9 mm et le pas P de 24 mm. Bien entendu, ces exemple numériques, de même que la forme, le nombre et les dimensions des trous sont susceptibles de varier en fonction de chaque application et ne sont nullement limitatifs.

## Revendications

1. Conduite tubulaire flexible pour le transport d'hydrocarbures, notamment gazeux, la conduite étant du type comportant au moins une carcasse (2), une gaine de pression interne (3) et une ou plusieurs nappes d'armure (5) et dont la carcasse (2), formant l'élément le plus interne de la conduite, est constituée par l'enroulement en spires agrafées d'un élément profilé (7) de type feuillard ou fil de forme, **caractérisée en ce que** les spires de la carcasse (2) comportent, dans l'épaisseur de l'élément profilé (7), des passages traversants (20, 21, 22) destinés à permettre l'écoulement, vers l'intérieur des spires de la carcasse (2), de l'hydrocarbure circulant dans la conduite.

2. Conduite selon la revendication 1, dont les spires de la carcasse (2) forment entre elles des déjoints intérieurs (9), **caractérisée en ce que** les passages (20, 21) sont situés au niveau des déjoints intérieurs (9) entre les spires.

3. Conduite selon l'une quelconque des revendications 1 ou 2, **caractérisée en ce que** les passages (20, 21, 22) sont formés par des trous (20, 21, 22) pratiqués dans l'épaisseur de l'élément profilé formant les spires de la carcasse (2).

4. Conduite selon la revendication 3, **caractérisée en ce que** les trous (20, 21, 22) sont orientés sensiblement parallèlement à l'axe (XX) de la conduite.

5. Conduite selon la revendication 4, **caractérisée en ce que** les trous (20, 21, 22) successifs d'une même spire sont alignés parallèlement à l'axe (XX) de la conduite.

6. Conduite selon la revendication 5, **caractérisée en ce que** les trous (20, 21, 22) de spires successives sont alignés parallèlement à l'axe (XX) de la conduite.

7. Conduite selon l'une quelconque des revendications précédentes, **caractérisée en ce que** la carcasse (2) est formée par un feuillard (7) conformé en S.

8. Conduite selon la revendication 7, **caractérisée en ce que** les trous (20, 21, 22) sont prévus dans au moins l'une des trois zones suivantes du S : zone centrale, zones d'extrémité des boucles du S.

9. Conduite selon l'une quelconque des revendications 7 ou 8, **caractérisée en ce que** les trous (20, 21, 22) ont un diamètre de l'ordre de l'épaisseur du feuillard (7).

10. Conduite selon l'une quelconque des revendications 7 à 9, **caractérisée en ce que** les trous (20, 21, 22) sont espacés le long du feuillard (7) d'une distance de l'ordre de 5 à 10 fois leur diamètre.

11. Procédé de fabrication d'une conduite tubulaire flexible pour le transport d'hydrocarbures, notamment gazeux, la conduite étant du type comportant au moins une carcasse (2), une gaine de pression interne (3) et une ou plusieurs nappes d'armure (5) et dont la carcasse (2) forme l'élément le plus interne de la conduite, le procédé étant du type comprenant le profilage et l'enroulement en spires d'un feuillard (7) de manière à réaliser l'agrafage des spires entre elles, **caractérisé en ce que** le feuillard (7) est préalablement perforé de façon à former, une fois les spires formées pour réaliser la carcasse (2), des passages traversants (20, 21, 22) destinés à permettre l'écoulement, vers l'intérieur des spires de la carcasse, de l'hydrocarbure circulant dans la conduite.

## Patentansprüche

1. Flexible röhrenförmige Leitung für den Transport von insbesondere gasförmigen Kohlenwasserstoffen, wobei die Leitung von der Art ist, umfassend wenigstens eine Karkasse bzw. Körper (2), ein inneres Druckrohr (3) und eine oder mehrere Armierungsummantelungen bzw. -schichten (5), und wobei die Karkasse (2), welche des am weitesten innen liegende Element der Leitung ausbildet, aus einer zusammengeklammerten bzw. -gefalzten windungs- bzw. spiralförmigen Ummantelung bzw. Umwicklung aus einem profilierten bandartigen oder formfadenförmigen Element (7) gebildet ist, **dadurch gekennzeichnet, daß** die Windungen bzw. Spiralen der Karkasse (2) in der Dicke des profilierten Elements (7) querverlaufende Durchgänge (20, 21, 22) umfassen, die dazu bestimmt sind, den Abfluß des Kohlenwasserstoffs, der in der Leitung zirkuliert, zum Inneren der Windungen der Karkasse (2) zu ermöglichen.

2. Leitung nach Anspruch 1, deren Windungen der Karkasse (2) untereinander innere Öffnungen bzw. Durchbrechungen (9) ausbilden, **dadurch gekennzeichnet, daß** die Durchtritte (20, 21) auf dem Niveau der inneren Durchbrechungen (9) zwischen den Windungen angeordnet sind.

3. Leitung nach einem der Ansprüche 1 oder 2, **dadurch gekennzeichnet, daß** die Durchtritte (20, 21, 22) durch Löcher (20, 21, 22) ausgebildet sind, die in der Dicke des profilierten Elements ausgeführt sind, welches die Windungen der Karkasse (2) ausbildet.

4. Leitung nach Anspruch 3, **dadurch gekennzeichnet, daß** die Löcher (20, 21, 22) im wesentlichen parallel zur Achse (XX) der Leitung ausgerichtet bzw. orientiert sind.

5. Leitung nach Anspruch 4, **dadurch gekennzeichnet, daß** die von ein und derselben Windung aufeinanderfolgenden Löcher (20, 21, 22) parallel zur Achse (XX) der Leitung ausgerichtet sind.

6. Leitung nach Anspruch 5, **dadurch gekennzeichnet, daß** die Löcher (20, 21, 22) von aufeinanderfolgenden Windungen parallel zur Achse (XX) der Leitung ausgerichtet sind.

7. Leitung nach einem der vorhergehenden Ansprüche, **dadurch gekennzeichnet, daß** die Karkasse (2) aus einem S-förmig geformten Band (7) gebildet ist.

8. Leitung nach Anspruch 7, **dadurch gekennzeichnet, daß** die Löcher (20, 21, 22) in wenigstens einer von drei aufeinanderfolgenden Zonen des S vorgesehen sind: einer zentralen Zone, Endzonen der Schleifen des S.

9. Leitung nach einem der Ansprüche 7 oder 8, **dadurch gekennzeichnet, daß** die Löcher (20, 21, 22) einen Durchmesser in der Größe der Dicke des Bands (7) aufweisen.

10. Leitung nach einem der Ansprüche 7 bis 9, **dadurch gekennzeichnet, daß** die Löcher (20, 21, 22) entlang des Bands (7) um einen Abstand in der Größenordnung von 5 bis 10 mal ihrem Durchmesser beabstandet sind.

11. Herstellungsverfahren für eine flexible rohrförmige Leitung für den Transport von insbesondere gasförmigen Kohlenwasserstoffen, wobei die Leitung von der Art ist, umfassend wenigstens eine Karkasse (2), ein inneres Druckrohr (3) und eine oder mehrere Armierungsummantelung(en) (5), und wobei die Karkasse (2) das am weitesten innen liegende Element der Leitung ausbildet, wobei das Verfahren der Art ist, welche die Profilierung und Umwicklung in Windungen eines Bands (7) in der Art umfaßt, um die Klammer- bzw. Falzverbindung der Windungen untereinander zu realisieren, **dadurch gekennzeichnet, daß** das Band (7) vorab derart perforiert ist, um, sobald die Windungen zum Realisieren der Karkasse (2) ausgebildet werden, die querverlaufenden Durchtritte (20, 21, 22) auszubilden, die für ein Ergießen in Richtung zum Inneren der Windungen der Karkasse des in der Leitung zirkulierenden Kohlenwasserstoffs bestimmt sind.

## Claims

1. Flexible tubular pipe for transporting hydrocarbons, especially gaseous hydrocarbons, the pipe being of the type comprising at least one carcass (2), an internal pressure sheath (3) and one or more armour plies (5), the carcass (2) of which, forming the innermost element of the pipe, is made up by the winding, with interlocked turns, of a profiled element (7) of the shaped wire or strip type, **characterized in that** the turns of the carcass (2) include, in the thickness of the profiled element (7), through-passages (20, 21, 22) designed to allow the hydrocarbon flowing in the pipe to flow into the turns of the carcass (2).

2. Pipe according to Claim 1, the turns of the carcass (2) of which form between them internal gaps (9), **characterized in that** the passages (20, 21) are located level with the internal gaps (9) between the turns.

3. Pipe according to either of Claims 1 and 2, **characterized in that** the passages (20, 21, 22) are formed by holes (20, 21, 22) made in the thickness of the profiled element that forms the turns of the carcass (2).

4. Pipe according to Claim 3, **characterized in that** the holes (20, 21, 22) are oriented approximately parallel to the axis (XX) of the pipe.

5. Pipe according to Claim 4, **characterized in that** the successive holes (20, 21, 22) of any one turn are aligned parallel to the axis (XX) of the pipe.

6. Pipe according to Claim 5, **characterized in that** the holes (20, 21, 22) of successive turns are aligned parallel to the axis (XX) of the pipe.

7. Pipe according to any one of the preceding claims, **characterized in that** the carcass (2) is formed by an S-shaped strip (7).

8. Pipe according to Claim 7, **characterized in that** the holes (20, 21, 22) are provided in at least one of the three following regions of the S, namely the central region and the end regions of the loops of the S.

9. Pipe according to either of Claims 7 and 8, **characterized in that** the holes (20, 21, 22) have a diameter of the order of the thickness of the strip (7).

10. Pipe according to any one of Claims 7 to 9, **characterized in that** the holes (20, 21, 22) are spaced apart along the strip (7) by a distance of around 5 to 10 times their diameter.

11. Process for manufacturing a flexible tubular pipe for transporting hydrocarbons, especially gaseous hydrocarbons, the pipe being of the type comprising at least one carcass (2), an internal pressure sheath (3) and one or more armour plies (5), the carcass (2) of which forms the innermost element of the pipe, the process being of the type that includes the profiling and the winding in turns of a strip (7) so as to interlock the turns, **characterized in that** the strip (7) is perforated beforehand so as to form, once the turns have been formed in order to produce the carcass (2) through-passages (20, 21, 22) intended to allow the hydrocarbon flowing in the pipe to flow into the turns of the carcass.
